Europäisches Patentamt

European Patent Office

Office européen des brevets

(11) Publication number : **0 368 351 B1**

(12) **EUROPEAN PATENT SPECIFICATION**

(45) Date of publication of patent specification :
15.02.95 Bulletin 95/07

(51) Int. Cl.⁶ : **G06K 11/14**

(21) Application number : **89120907.4**

(22) Date of filing : **10.11.89**

(54) **Coordinate input apparatus.**

(30) Priority : **11.11.88 JP 283861/88**
**11.11.88 JP 283862/88**
**11.11.88 JP 283863/88**
**11.07.89 JP 177011/89**

(43) Date of publication of application :
**16.05.90 Bulletin 90/20**

(45) Publication of the grant of the patent :
**15.02.95 Bulletin 95/07**

(84) Designated Contracting States :
**DE ES FR GB IT NL**

(56) References cited :
**EP-A- 0 169 538**
**EP-A- 0 258 972**

(73) Proprietor : **CANON KABUSHIKI KAISHA**
**30-2, 3-chome, Shimomaruko,**
**Ohta-ku**
**Tokyo (JP)**

(72) Inventor : **Kaneko, Kiyoshi**
**1-3-401, Konandai 2-chome**
**Konan-ku**
**Yokohama-shi Kanagawa-ken (JP)**

Inventor : **Kobayashi, Katsuyuki**
**8-3-421, Horinouchi 1-chome**
**Suginami-ku**
**Tokyo (JP)**
Inventor : **Kamono, Takeshi**
**19-3, Aobadai 1-chome, Midori-ku**
**Yokohama-shi Kanagawa-ken (JP)**
Inventor : **Yanagisawa, Ryozo**
**3-401, Nogikuno**
**Matsudo-shi Chiba-ken (JP)**
Inventor : **Taniishi, Shinnosuke**
**13-1-401, Kajigaya 2-chome**
**Takatsu-ku**
**Kawasaki-shi Kanagawa-ken (JP)**
Inventor : **Yoshimura, Yuichiro**
**95-7, Nakata-cho, Izumi-ku**
**Yokohama-shi Kanagawa-ken (JP)**
Inventor : **Tanaka, Atsushi No. 87-201**
**River-saido**
**7-1, Miyazaki 3-chome**
**Miyamae-ku**
**Kawasaki-shi Kanagawa-ken (JP)**

(74) Representative : **Tiedtke, Harro, Dipl.-Ing. et al**
**Patentanwaltsbüro**
**Tiedtke-Bühling-Kinne & Partner**
**Bavariaring 4**
**D-80336 München (DE)**

EP 0 368 351 B1

## Description

BACKGROUND OF THE INVENTION

Field of the Invention

The present invention relates to a coordinate input apparatus and, more particularly, to a coordinate input apparatus in which a vibration which was input by a vibration pen is detected by a plurality of vibration sensors attached to a vibration propagating plate and the coordinates of the vibration pen on the vibration propagating plate are detected.

Related Background Art

A coordinate input apparatus in which a lateral wave component of a plate wave elastic wave which was input onto a vibration propagating plate by a vibration input pen is detected and the coordinates of the vibration input point are calculated has been disclosed in a commonly-assigned U.S. Application Serial No. 067,546, filed on June 29, 1987, by Kaneko et al.

In the above coordinate input apparatus, the accurate distance from the vibration input point is obtained from the relation between a vibration propagation time based on the group velocity (envelope signal) and a vibration propagation time based on the phase velocity (phase signal). In the coordinate input apparatus, the detection timing of the vibration propagation time due to the envelope signal is used as a reference and the vibration propagation time due to the phase signal is detected.

That is, since there is a predetermined relation between the envelope signal and the phase signal in accordance with the vibration propagation distance, a predetermined characteristic point (for instance, the peak point) is first detected with respect to the envelope signal and is compared with a predetermined threshold value with respect to the phase signal by using the detection timing as a reference. For instance, in the portion in which the phase signal first exceeds the predetermined threshold value, a gate signal of a predetermined time width is given. Further, the first leading point (zero-cross point) of the phase signal in the gate signal is detected. Due to this, the vibration propagation time can be stably detected in terms of the detecting system.

Furthermore, from document EP-A-0 258 972 a cooordinate input apparatus is known wherein the group propagation time is detected by means an envelope detection circuit, an envelope peak detection circuit and a group propagation time signal detection circuit. The result of detecting the group propagation time is used to trigger a monostable multivibrator which defines the period during which a zero-crossing point of the received input signal is used to define the end point of the phase propagation time.

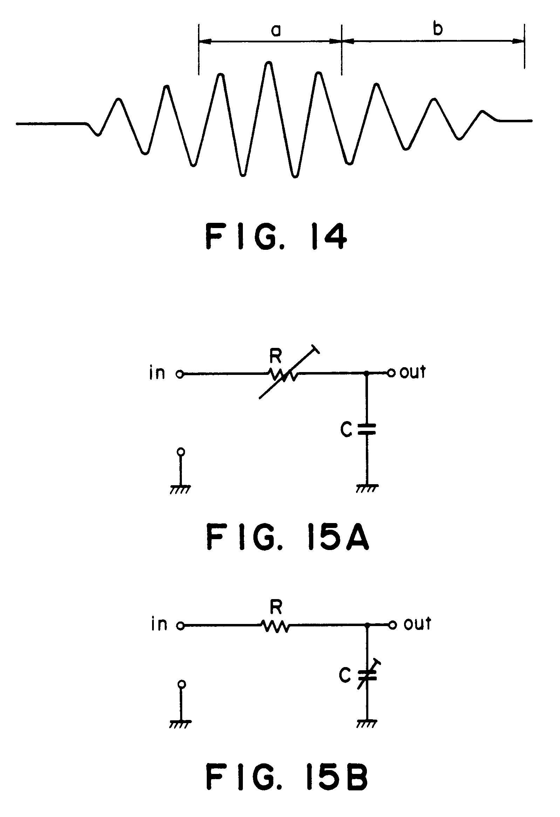

However, since a time lag generally occurs in the detection of the characteristic point of the envelope signal, if the detection timing is used as a reference, the unstable signal portion of the rear portion of the phase signal is detected with respect to the phase signal. That is, Fig. 14 is a diagram showing an example of a signal detected by a vibration sensor. In the diagram, a central portion a is constructed by a stable wavelength (frequency) but a rear portion b is constructed by an unstable wavelength (frequency) which is being attenuated and is oscillating.

It is also considered a method whereby a delay circuit is provided for a phase signal circuit in order to match with the delay time in the detection of the characteristic point of the envelope signal as mentioned above. However, this results in increase in costs of the apparatus.

On the other hand, there is also a case where the vibration sensor receives external disturbance noises or where noises of another circuit, for instance, a digital signal processing system or the like are mixed into the detection signal of the vibration sensor. Therefore, if the gate signal is given on the basis of such an unstable detection signal, the determination of the input coordinates also becomes unstable.

SUMMARY OF THE INVENTION

It is a first object of the invention to provide a coordinate input apparatus which can obtain accurate coordinates of an input point by a simple construction.

In an embodiment of the coordinate input apparatus an envelope signal of the vibration detected by a vibration sensor is subjected to a filtering process and the coordinate position is calculated on the basis of the signal subjected to the filtering processed and a phase signal detected by the vibration sensor.

In another embodiment of the coordinate input apparatus an envelope signal of the vibration detected by the vibration sensor is subjected to a filtering process and a primary differentiating process and the coordinate position is calculated on the basis of the signal subjected to the filtering process and the primary differentiating process and a phase signal detected by the vibration sensor.

In a further embodiment of the coordinate input apparatus an envelope signal of the vibration detected by a vibration sensor is subjected to a filtering process and a secondary differentiating process and the coordinate position is calculated on the basis of the signal subjected to the filtering process and the secondary differentiating process and a phase signal detected by the vibration sensor.

A second object of the invention is to provide a coordinate input apparatus which can stably input coordinates without being influenced by external disturbance noises.

According to the invention these object are accomplished by a coordinate input apparatus comprising: vibration input means for generating a vibration; a vibration propagating member for propagating said vibration which is input by said vibration input means; vibration sensor means for detecting said vibration which is propagated in said vibration propagating member; envelope output means comprising filter means for outputting an envelope signal of a signal received by said vibration sensor means; first detecting means for detecting a peak of said envelope signal which is output from said envelope output means and for detecting a group propagation time of said received signal based on the detection of said peak; second detecting means for detecting a phase propagation time of said received signal; calculating means for calculating position coordinates of said vibration input means on the basis of said group propagation time detected by said first detecting means and said phase propagation time detected by said second detecting means; said coordinate input apparatus being characterized in that a gate signal output means is provided for detecting when a portion of said envelope signal exceeds a predetermined threshold value and for outputing a gate signal in response thereto; said second detecting means detect said phase propagation time of said received signal by detecting the zero-crossing point of a leading edge of said received signal during a period of time when said gate signal is output from said gate signal output means.

Furthermore, these objects are accomplished by a coordinate input apparatus comprising: vibration input means for generating a vibration; a vibration propagating member for propagating said vibration which is input by said vibration input means; vibration sensor means for detecting said vibration which is propagated in said vibration propagating member; envelope output means comprising filter means for outputting an envelope signal of a signal received by said vibration sensor means; differentiating means for outputting a n-order differential signal of said envelope signal, where n is a positive integer; first detecting means for detecting a peak of said envelope signal which is output from said envelope output means and for detecting a group propagation time of said received signal based on the detection of said peak; second detecting means for detecting a phase propagating time of said received signal; calculating means for calculating position coordinates of said vibration input means on the basis of said group propagation time detected by said first detecting means and said phase propagation time detected by said second detecting means; said coordinate input apparatus being characterized in that a gate signal output means is provided for detecting when a portion of said n-order differential signal which is output from said differentiating means exceeds a predetermined threshold value and for outputting a gate signal in response thereto; said second detecting means detect said phase propagation time of said received signal by detecting the zero-crossing point of a leading edge of said received signal during a period of time when said gate signal is output from said gate signal output means.

The advantages of the invention will become apparent and obvious to those skilled in the pertinent art upon referring to the following description provided in connection with the accompanying drawings, of which:

## BRIEF DESCRIPTION OF THE DRAWINGS

Fig. 1 is a block constructional diagram of a coordinate input apparatus of a first embodiment of the present invention;

Fig. 2 is a diagram showing a structure of a vibration pen 3 in the first embodiment;

Fig. 3 is a block constructional diagram of a controller 1 in the first embodiment;

Fig. 4 is a timing chart for explaining a state of the vibration propagation of the first embodiment;

Fig. 5 is a block constructional diagram of a signal waveform detector in the first embodiment;

Fig. 6 is a block constructional diagram of an envelope detector 52 in the first embodiment;

Fig. 7 is a diagram for explaining a coordinate calculating process in the first embodiment;

Fig. 8 is a block constructional diagram of a signal waveform detector in a second embodiment of the present invention;

Fig. 9 is a timing chart for the operation in Fig. 8;

Fig. 10 is a block constructional diagram of a signal waveform detector in a third embodiment of the present invention;

Fig. 11 is a timing chart for the operation in Fig. 10;

Fig. 12 is a block constructional diagram of an envelope detector in a fourth embodiment of the present invention;

Figs. 13A and 13B are diagrams for explaining the frequency characteristics of an LPF and a BPF, respectively;

Fig. 14 is a diagram showing an example of a signal detected by a vibration sensor; and

Figs. 15A and 15B are diagrams showing examples of LPF circuits in the first embodiment.

## DETAILED DESCRIPTION OF THE PREFERRED EMBODIMENTS

Embodiments according to the present invention will be described in detail hereinbelow with reference to the drawings.

[First embodiment]

The first embodiment relates to the case where a gate signal is generated by comparing an output signal of a filter circuit with a predetermined threshold value.

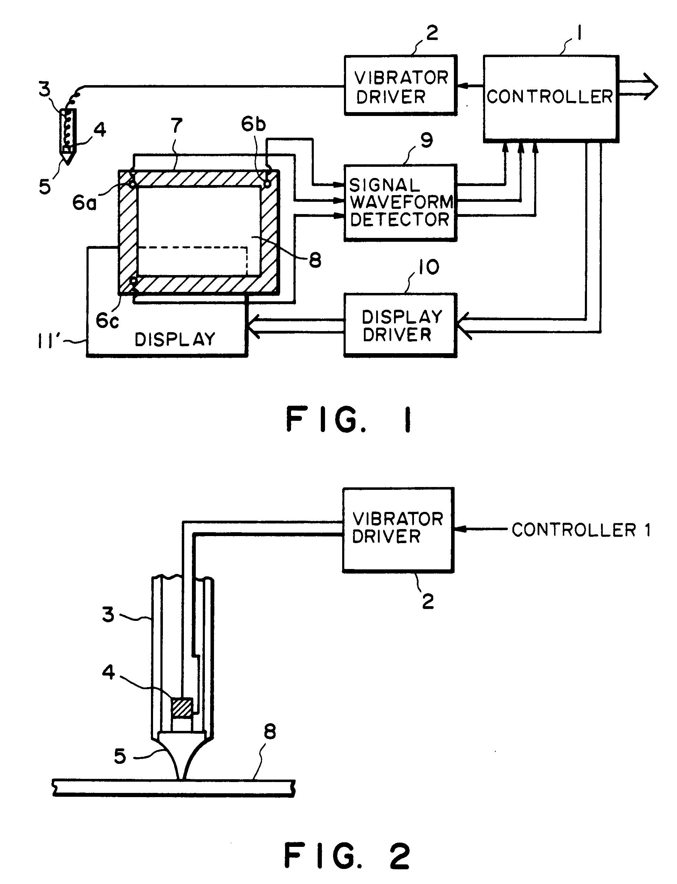

Fig. 1 is a block constructional diagram of a coordinate input apparatus of the first embodiment. In the diagram, reference numeral 3 denotes a vibration input means or a vibration pen. The user grasps the vibration pen 3 by the hand and inputs coordinates to an arbitrary position on a vibration propagating member or a vibration propagating plate 8. The vibration pen 3 has therein a vibrator 4 comprising a piezoelectric element or the like. An ultrasonic vibration which is generated by the vibrator 4 is propagated to the vibration propagating plate 8 through a horn portion 5 having a pointed tip. Reference numeral 2 indicates drive means or a vibrator driver to drive the vibrator 4 by ultrasonic pulses. The vibration propagating plate 8 propagates the ultrasonic vibration (plate wave) received from the vibration pen 3 to vibration sensor means or vibration sensors 6a to 6c comprising piezoelectric elements or the like attached to the corner portions of the vibration propagating plate 8. The vibration propagating plate 8 is made of, for instance, an acrylic plate, a glass plate, or the like. Reference numeral 7 indicates a reflection preventing material for supporting the vibration propagating plate 8 and preventing that the ultrasonic vibration propagated in the vibration propagating plate 8 is reflected by its peripheral portions and returned to the direction of the central portion of the vibration propagating plate 8. The reflection preventing material 7 is made of, for example, a silicon rubber or the like. Reference numeral 9 represents a signal waveform detector for outputting corresponding detection timing signals in accordance with the detection signals of the ultrasonic vibration which were detected by the vibration sensors 6a to 6c, respectively. Reference numeral 1 denotes a calculating means or a controller for executing the main control of the apparatus in the embodiment and calculating the input coordinates. That is, the controller 1 sends an ultrasonic pulse signal to the vibrator driver 2 and starts an internal timer. The controller 1 also detects the vibration propagation times which are required until the vibration is transferred to the vibration sensors 6a to 6c from the time point when the pulse signal was sent on the basis of detection timing signals which were input from the signal waveform detector 9. On the basis of the detected vibration propagation time information, the controller 1 calculates the input coordinates (x, y) of the vibration pen 3 on the vibration propagating plate 8.

Further, the controller 1 variously uses the calculated input coordinates (x, y). For instance, on the basis of the input coordinates (x, y) obtained, the controller 1 variously controls the outputting operation of a display 11′ through a display driver 10. In this case, the vibration propagating plate 8 is laid over the display 11′ comprising preferably a CRT, a liquid crystal display, or the like which can display dots. The display 11′ displays dots at the position corresponding to the position on the vibration propagating plate 8 which was traced by the vibration pen 3. That is, the dots are displayed at the position on the display 11′ corresponding to the vibration pen 3. Therefore, when the vibration pen 3 is moved, an image which is constructed by the elements such as points, lines, or the like appears in accordance with the locus of the vibration pen 3 as if it was written on a paper. Or, it is also possible to use other information input method whereby a menu is displayed on the display 11′ and a desired item is selected from the menu by using the vibration pen 3 or whereby a prompt is displayed and the vibration pen 3 is touched to a predetermined position, or the like.

Fig. 2 is a diagram showing a structure of the vibration pen 3 in the first embodiment. The same parts and components as those shown in Fig. 1 are designated by the same reference numerals. In the diagram, an ultrasonic pulse signal of a low level (for instance, 5 V or the like) is sent from the controller 1. The vibrator driver 2 is an amplifying circuit whose output can be driven by a low impedance and amplifies a low level input pulse signal by a predetermined gain and applies the amplified signal to the vibrator 4. The vibrator 4 converts the electrical drive signal into the mechanical ultrasonic vibration. The ultrasonic vibration is amplitude amplified through the horn portion 5 and is transferred to the vibration propagating plate 8. A vibrating frequency of the vibrator 4 is selected to a value within a range in which a plate wave can be generated from the vibration propagating plate 8 made of an acrylic plate, a glass plate, or the like. When driving the vibrator 4, there is selected a vibrating mode such that the vibrator 4 vibrates mainly in the direction perpendicular to the surface of the vibration propagating plate 8. By setting the vibrating frequency of the vibrator 4 to a resonance frequency of the vibrator 4, the vibration can be efficiently converted. Since the elastic wave which is propagated to the vibration propagating plate 8 is the plate wave as mentioned above, there is an advantage such that it is difficult to be influenced by scratches, obstacles, or the like on the surface of the vibration propagating plate 8 as compared with the surface wave.

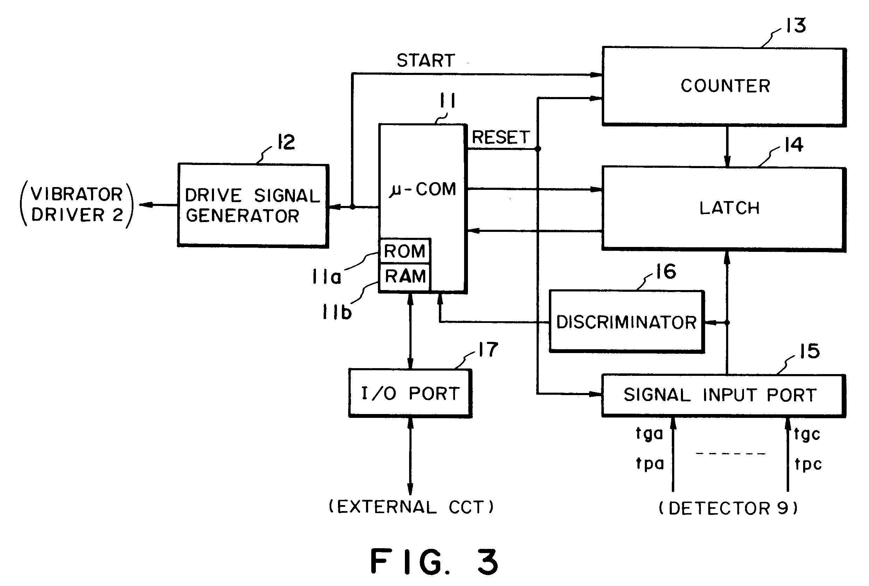

Fig. 3 is a block constructional diagram of the controller 1 in the first embodiment. In the diagram, reference numeral 11 denotes a microcomputer (CPU) for executing various operations and control. Reference numeral 11a indicates an ROM in which control programs (not shown) which are executed by the CPU 11 are stored; 11b indicates an RAM which is used as a work area by the CPU 11; and 12 represents a drive signal generator to output a drive pulse signal of a predetermined frequency to the vibrator driver 2 synchronously with a start signal from the CPU 11. The start signal from the CPU 11 also starts the time counting operation by a timer counter 13.

On the other hand, the signal waveform detector 9 receives the detection outputs of the vibration sensors 6a to 6c and outputs various detection timing signals (timing pulse signals) to measure the vibration propagation times. Those signals include: detection timing signals $t_{ga}$ to $t_{gc}$ of an envelope signal and detection timing signals $t_{pa}$ to $t_{pc}$ of a phase signal, which will be explained hereinlater. The detection timing signals are generated at the timings corresponding to the distances between the vibration pen 3 and the vibration sensors 6a to 6c and are input to a detection signal input port 15 by parallel wirings. Reference numeral 14 indicates a latch circuit for latching the content (vibration propagation times) of the counter 13 in response to the inputs of the detection timing signals and holding them into memory areas corresponding to the vibration sensors 6a to 6c, respectively. Reference numeral 16 denotes a discriminator for discriminating whether the detection timing signals from all of the vibration sensors 6a to 6c have been input or not. If they have been input, the discriminator 16 outputs a signal indicative of such a fact to the CPU 11. Thus, the CPU 11 calculates the coordinates (x, y) of the position on the vibration propagating plate 8 at which the vibration pen 3 was put on the basis of the vibration propagation times regarding the vibration sensors 6a to 6c. Reference numeral 17 denotes an I/O port. An external circuit such as a display 11' is controlled through the I/O port 17.

If a discrimination signal from the discriminator 16 is not input to the CPU 11 even after the elapse of the maximum time which is determined by the operation delay time of each electronic circuit in the embodiment and the maximum delay time of the vibration propagation and the like, the CPU 11 does not calculate the coordinates but outputs a reset signal and repeats the above operations.

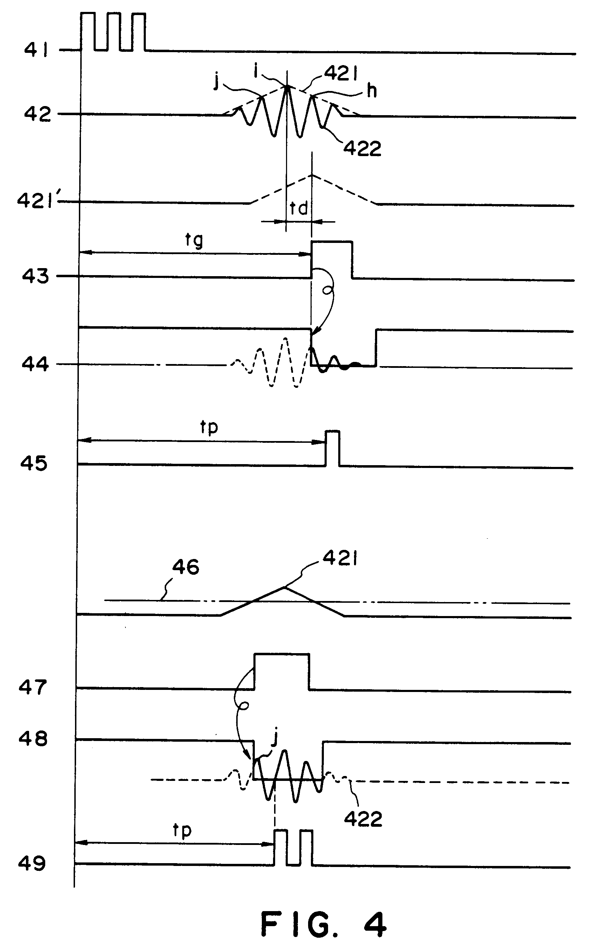

Fig. 4 is a timing chart for explaining a state of the vibration propagation in the first embodiment. In the diagram, reference numeral 41 denotes an ultrasonic pulse signal generated from the drive signal generator 12. The signal 41 comprises a few pulses. The vibrator 4 ultrasonic vibrates on the basis of the ultrasonic pulse signal 41. The ultrasonic vibration is transferred to the vibration propagating plate 8 through the horn portion 5. Further, the ultrasonic vibration is propagated by the vibration propagating plate 8 and detected by the vibration sensors 6a to 6c. Reference numeral 42 indicates a signal detected by, for example, the vibration sensor 6a. The signal 42 is delayed by only the delay time corresponding to a vibration propagation distance d.

Since the plate wave in the embodiment is the dispersive lateral wave, the relative relation (phase) between a detection waveform 422 (hereinafter, also referred to as a phase signal 422) and an envelope signal 421 extracted from the detection waveform 422 changes in dependence on the vibration propagation distance d. Practically speaking, for instance, assuming that the vibration pen 3 continuously moves away from the vibration sensor 6a, in the case where such a state is observed by a synchroscope, at first, the maximum peak exists on the side of h of the phase signal 422, then the maximum peak is shifted to the side of i as shown in the diagram. When the vibration pen 3 further moves away from the vibration sensor 6a, the maximum peak is shifted to the side of j. On the other hand, when the motion of the vibration pen 3 is reversed, the shifting operation of the maximum peak is also reversed.

It is now assumed that a progressing velocity of the envelope signal 421 is set to a group velocity $V_g$ and a progressing velocity of the phase signal 422 is set to a phase velocity $V_p$. The distance d between the vibration pen 3 and each of the vibration sensors 6a to 6c is obtained as follows on the basis of the group velocity $V_g$ and the phase velocity $V_p$.

First, attention is paid only to the envelope signal 421. The propagation time by the group velocity $V_g$ is detected by detecting the arrival of a certain characteristic point on the envelope signal 421, for instance, the peak point on the envelope signal 421. If a method whereby the peak point on the envelope signal 421 is detected by comparing two continuous peak values of the phase signal 422 is used, the detection time point of the peak point on the envelope signal 421 is delayed by at least the time corresponding to one wavelength of the phase signal 422. Reference numeral 43 denotes a detection timing signal of the peak point on the envelope signal 421 in this case. The time $t_g$ from the generation time point of the pulse signal 41 to the detection time

5

point of the peak point is the vibration propagation time by the group velocity $V_g$. In addition, since the group velocity $V_g$ has already been known, the distance d between the vibration pen 3 and each of the vibration sensors 6a to 6c is obtained by the following equation (1).

$$d = V_g \cdot t_g \quad (1)$$

Since a set of waves of the phase signal 422 is set to one wave, the resolution (accuracy) of the envelope signal 421 is lower than that in the case of the waves of the phase signal 422. On the other hand, if a special wave of the phase signal 422 corresponding to a special pulse vibration applied can be always detected, the accurate distance d can be obtained by ($d = V_p \cdot t_p$). However, it is difficult to always detect such a special wave. Therefore, attention is paid to the phase between the envelope signal 421 and the phase signal 422.

For instance, it is now assumed that a threshold value signal 44 of a predetermined width is formed from a certain special point on the phase signal 422, that is, from the peak detection time point regarding the envelope signal 421 from the generation time point of the pulse signal 41 and the first leading zero-cross point of the phase signal 422 which appears first during this interval is detected and a pulse signal 45 is obtained. When the time until the pulse signal 45 is obtained assumes $t_p$, the distance between the vibration pen 3 and each of the vibration sensors 6a to 6c can be obtained by equation (2).

$$d = n \cdot \lambda_p + V_p \cdot t_p \quad (2)$$

where,

$\lambda_p$:     wavelength of the elastic wave

n :     integer

In the equation (2), the value of integer n changes such as 0, 1, 2, ... as the maximum peak position of the phase signal 422 is shifted from the side of h to the side of j as mentioned above. This is because since the peak detection time point of the envelope signal 421 is shifted as the maximum peak position of the phase signal 422 is shifted, the wave of the phase signal 422 which is used to detect the vibration propagation time $t_p$ is also moved from the side of h to the side of j. Therefore, in consideration of the equations (1) and (2), the case where a certain waveform in the phase signal 422 is used is used as a reference. Assuming that the wave which is at present being used is used within a range such that the phase deviation between the peak detection time point of the envelope signal 421 and the wave of the phase signal which is at present used does not exceed a predetermined value from such a reference piont, it is sufficient to update the value of n in accordance with the equation (3).

$$n = \left[ \frac{V_g \cdot t_g - V_p \cdot t_p}{\lambda_p} + \frac{1}{N} \right] \quad \ldots \quad (3)$$

[ ] denotes a Gaussian symbol. On the other hand, N indicates a real number other than "0" and is set to a proper numerical value. For instance, assuming that N = 2, the value of n can be updated every ±1/2 wavelength of the detection accuracy of the envelope peak. That is, the value of n is updated such that 0 = [ -1/2 + 1/2 ] , 0 = [0 + 1/2] , and 1 =[1/2 + 1/2 ] . By substituting the value of n obtained by the equation (3) into equation (2), the accurate distance d can be obtained.

In the above example, the peak detection time of the envelope signal 421 includes at least the delay time $t_d$ of one wavelength or more of the phase signal 422. Therefore, the envelope signal is substantially delayed like a signal 421' and it is undesirable to use such a delayed signal as a reference for the phase signal detection. A method of detecting the phase signal in the first embodiment will now be described hereinbelow.

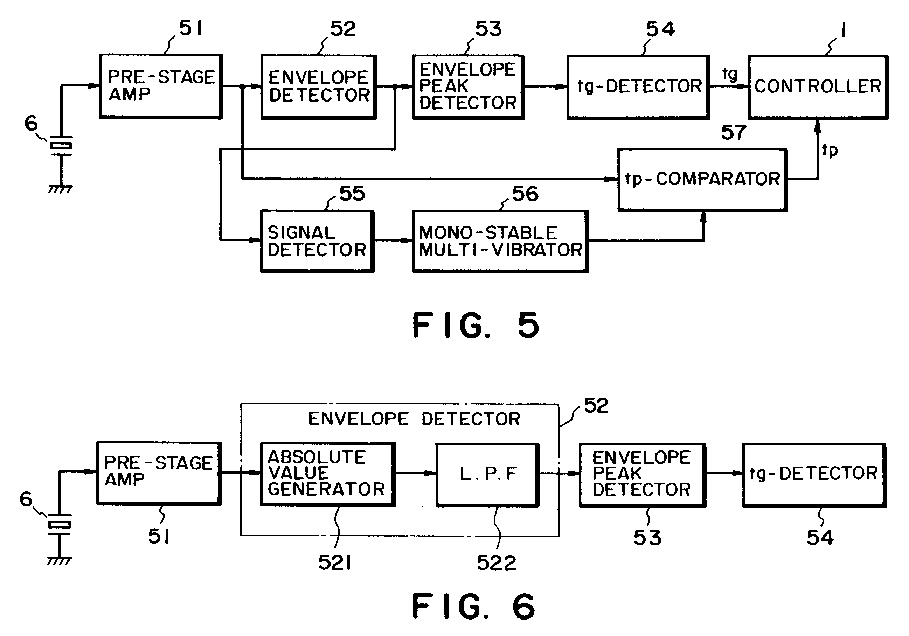

Fig. 5 is a block constructional diagram of the signal waveform detector in the first embodiment. In the diagram, reference numeral 51 denotes a pre-stage amplifier to amplify the output signal of each of the vibration sensors 6a to 6c to a predetermined level. Reference numeral 52 indicates an envelope output means or an envelope detector to extract an envelope signal from the amplified signal (Fig. 6) and 53 represents an envelope peak detector for detecting the peak of the envelope signal and triggering a $t_g$-detector 54 at the peak detection timing. The $t_g$-detector 54 comprises, for instance, a mono-stable multi-vibrator. The controller 1 obtains the vibration propagation time $t_g$ by the group velocity $V_g$ on the basis of the output of the counter 13 at the reception timing of the $t_g$ detection pulse signal.

On the other hand, reference numeral 55 denotes a signal detector to form a pulse signal 47 of the portion exceeding a threshold signal 46 of a predetermined level in the envelope signal 421 detected by the envelope detector 52. Reference numeral 56 denotes a mono-stable multi-vibrator for generating a gate signal 48 of a predetermined time width which was triggered by the first leading edge of the pulse signal 47. Reference numeral 57 indicates a $t_p$-comparator for detecting the zero-cross point of the first leading edge of the phase signal 422 for the interval during which the gate signal 48 is ON and outputting a detection signal 49 of the time $t_p$.

6

Fig. 6 is a block constructional diagram of the envelope detector 52 in the first embodiment. In the diagram, reference numeral 521 indicates an absolute value generator for synthesizing the pre-stage amplified detection signal and its inverted amplified signal by matching the gains and for outputting an absolute value signal. Reference numeral 522 denotes a low pass filter (LPF) for allowing the low frequency component of the absolute value signal to be passed. In this example, the envelope signal 421 is output. Thus, the noise component in the detection signal is eliminated and an always stable reference gate signal can be provided.

Figs. 15A and 15B are diagrams showing examples of the LPF in the first embodiment. In the diagrams, if a resistor R or a capacitor C is made variable, a cut-off frequency can be easily adjusted. On the other hand, the LPF 522 can be also constructed by a coil L and a capacitor C or by an active filter.

As mentioned above, the controller 1 calculates the propagation time $t_p$ by the phase velocity $V_p$ on the basis of the output of the counter 13 at the generation timing of the first detection pulse signal 49. Such a construction of the signal waveform detector 9 is provided every system of the vibration sensors 6a to 6c, so that the accurate distance from the coordinate input point to each of the vibration sensors 6a to 6c is obtained.

In the above method, consideration must be also paid to a change in level of the detection signal 422 due to a writing pressure, a vibration propagation distance, and the like by the vibration pen 3. That is, since the level of the threshold signal 46 has been fixed as mentioned above, when the level of the detection signal 422 changes, the level of the envelope signal 421 also changes and the generation position of the first detection pulse signal 49 also varies. For example, when the level of the envelope signal 421 is low, the detection signal 49 of the time $t_p$ is delayed by the time corresponding to one wavelength. However, such a delay is always set to the time which is integer times as long as one wavelength. Therefore, the delay is corrected by the controller 1. For instance, when the detection signal 49 of the time $t_p$ is detected for the time interval within two wavelengths for the detection signal of the time $t_g$, the detection signal 49 of the time $t_p$ is used as it is. However, when there is a time deviation of two wavelengths or more, the delay time is corrected so as to become the time within two wavelengths for the detection signal 43 of the time $t_g$. That is, the delay time is corrected in a manner such that the value which is obtained by adding the time which is integer times as long as the wavelength to the time $t_p$ which was actually detected is included in the time within two wavelengths. The resultant time $t_p$ is used for the calculation.

Although a discrimination regarding whether the correction is executed or not has been made by checking to see if the time deviation is within two wavelengths or not, such a discrimination reference may be also set to one wavelength or three wavelengths.

The controller 1 latches the content of the counter 13 into the latch circuit 14 in accordance with the detection timing signals $t_{ga}$ to $t_{gc}$ and $t_{pa}$ to $t_{pc}$. On the basis of those values, the CPU 11 calculates the distances $d_a$ to $d_c$ between the vibration pen 3 and the vibration sensors 6a to 6c in accordance with the equations (2) and (3). It is sufficient that the number of vibration sensors is arbitrary set to two or more.

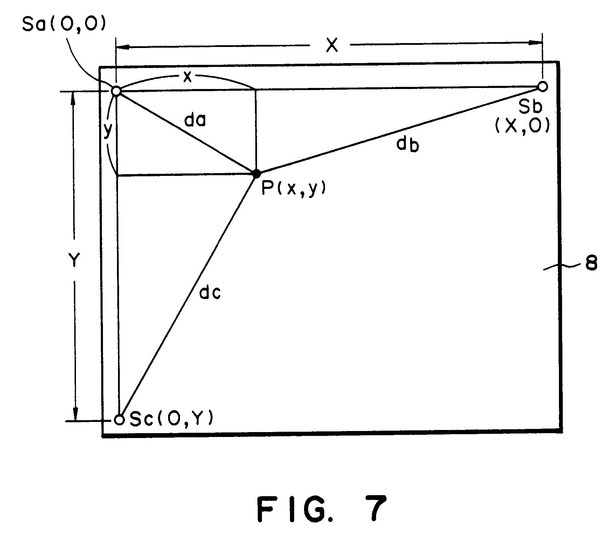

Fig. 7 is a diagram for explaining the coordinate calculating process in the first embodiment. In the diagram, three vibration senosrs 6a to 6c are attached to the corner portions of the vibration propagating plate 8. It is assumed that the coordinates of the vibration sensors are set to $S_1 (0, 0)$ for the vibration sensor 6a, $S_3 (0, Y)$ for the vibration sensor 6b, and $S_2 (X, 0)$ for the vibration sensor 6c. According to the theorem of three squares, the coordinates (x, y) of an input point P are obtained by the equations (4) and (5).

$$x = \frac{X}{2} + \frac{(d_1 + d_2)(d_1 - d_2)}{2X} \quad (4)$$

$$y = \frac{Y}{2} + \frac{(d_1 + d_3)(d_1 - d_3)}{2Y} \quad (5)$$

By repeating the above operation, the input coordinates can be detected in a real-time manner.

[Second embodiment]

The second embodiment relates to the case where a gate signal is generated by comparing the primary differential output signal of the output signal of the filter circuit with a predetermined threshold value. The portions which are not particularly described are similar to those in the first embodiment hereinbelow.

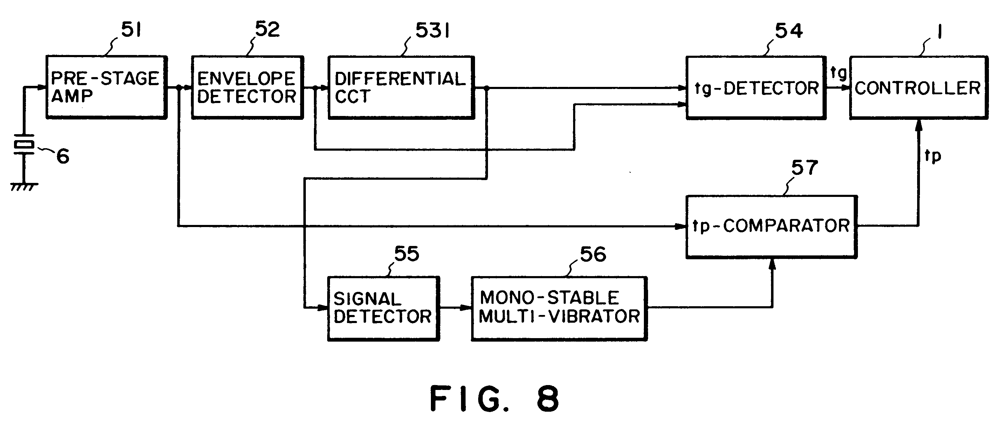

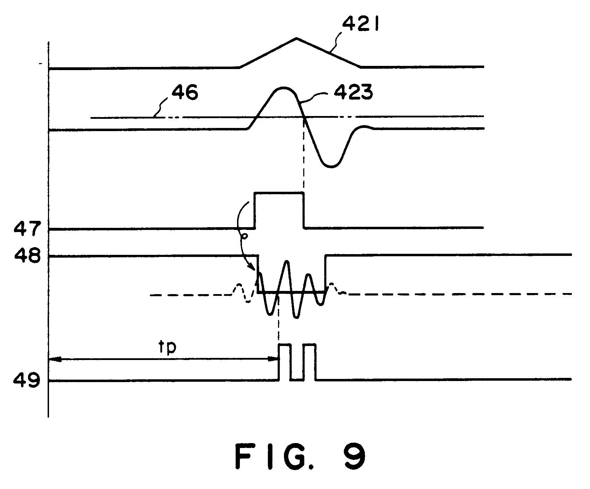

Fig. 8 is a block constructional diagram of a signal waveform detector in the second embodiment. Fig. 9 is a timing chart for the operation of Fig. 8. In the second embodiment, a primary differential signal 423 is formed by differentiating the envelope signal 421 by a differential circuit 531 and compared with the predetermined threshold value 46, thereby stabilizing the formation of the gate signal. The differential circuit 531 comprises, for instance, a high pass filter. Therefore, the differential signal 423 is a signal which was further subjected to the filtering process (noise elimination) than the envelope signal. Thus, it is more effective to present an erroneous detection.

7

[Third embodiment]

The third embodiment relates to the case where a gate signal is generated by comparing the secondary differential output signal of the output signal of the filter circuit with a predetermined threshold value.

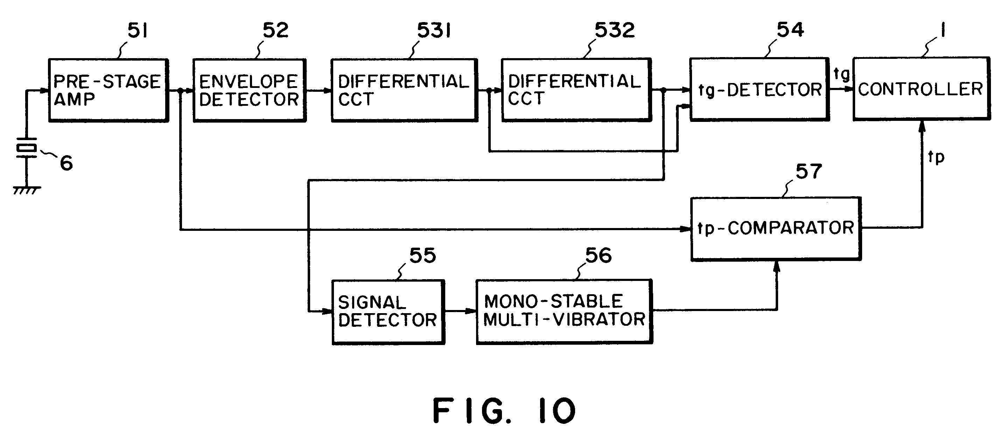

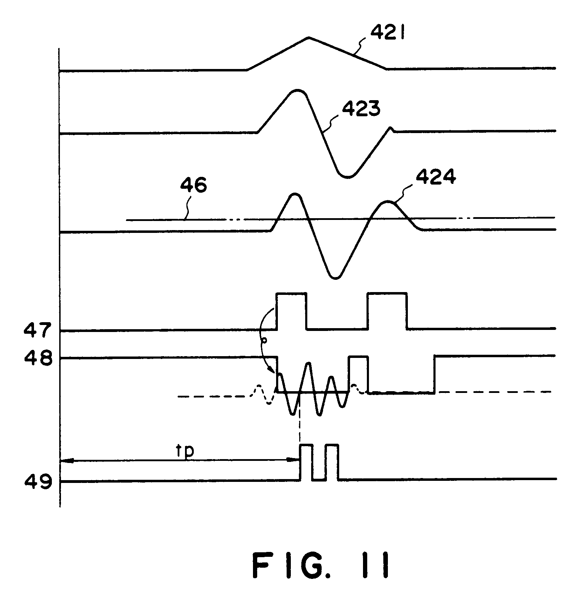

Fig. 10 is a block constructional diagram of a signal waveform detector in the third embodiment. Fig. 11 is a timing chart for the operation of Fig. 10.

In the third embodiment, a secondary differential signal 424 is formed by differentiating the envelope signal 421 twice by differential circuits 531 and 532 and compared with the predetermined threshold value 46, thereby stabilizing the formation of the gate signal. For instance, the differential circuit 532 comprises a high pass filter. Therefore, the differential signal 424 is a signal which was further subjected to the filtering process (noise elimination) than the second embodiment. Thus, it is more effective to prevent an erroneous detection.

[Fourth embodiment]

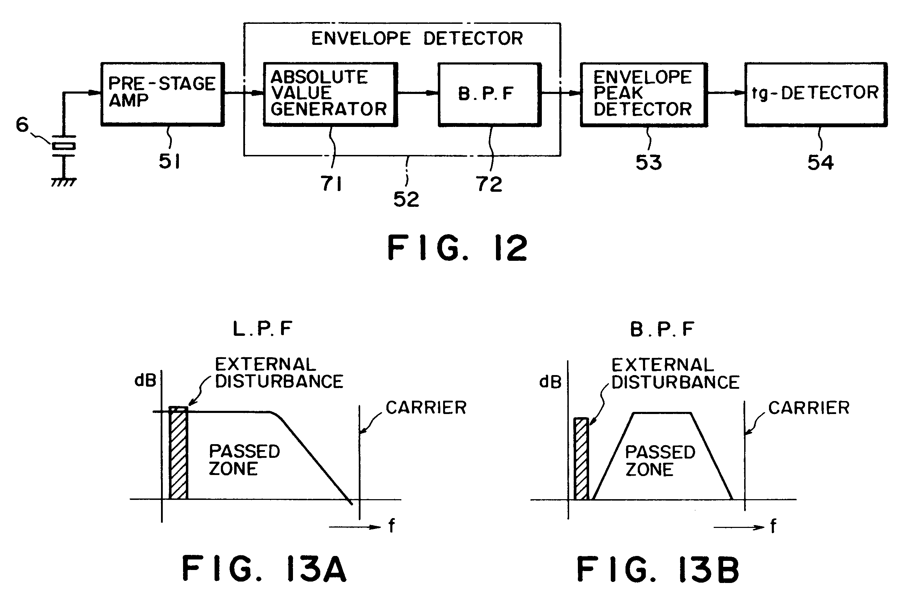

Fig. 12 is a block constructional diagram of the envelope detector 52 in the fourth embodiment. In the diagram, reference numeral 71 indicates an absolute value generator to form the absolute value signal of the detection signal 422. For instance, the absolute value generator 71 comprises a full-wave rectifier. Reference numeral 72 denotes a band pass filter (BPF) having a band width for allowing the envelope signal component to be passed.

Figs. 13A and 13B are diagrams showing frequency characteristics of the low pass filter (LPF) and the band pass filter (BPF) in the embodiment. As will be obvious from the diagrams, the BPF in the fourth embodiment cuts off the phase signal frequency component as a carrier frequency in the high band and can also cut off external disturbance components which are caused, for instance, when the vibration pen 3 pressed in the low band.

For instance, even in the case where the $t_g$-detector detects the peak of the envelope signal as a zero-cross point of the primary differentiation of the envelope signal, the external disturbance of the low frequency component exerts an influence on the detection of the zero-cross point of the primary differentiation. Therefore, such an external disturbance can be prevented by inserting a BPF at least before the detection of the characteristic point of the envelope signal.

In the embodiment, although the BPF 72 has been provided in the envelope detector 52, the invention is not limited to such a construction. It is also possible to use other construction in which, for instance, a high pass filter (HPF) is constructed by inserting a coupling capacitor (not shown) between the vibration sensor 6 and the pre-stage amplifier 51 or between the pre-stage amplifier 51 and the envelope detector 52 and is coupled with an LPF to cut off the carrier frequency.

## Claims

1. A coordinate input apparatus comprising:
   vibration input means (3) for generating a vibration; a vibration propagating member (8) for propagating said vibration which is input by said vibration input means (3);
   vibration sensor means (6a to 6c) for detecting said vibration which is propagated in said vibration propagating member (8);
   envelope output means (52) comprising filter means (522) for outputting an envelope signal (421) of a signal (422) received by said vibration sensor means (6a to 6c);
   first detecting means (53, 54) for detecting a peak of said envelope signal (421) which is output from said envelope output means (52) and for detecting a group propagation time (tg) of said received signal (422) based on the detection of said peak;
   second detecting means (57) for detecting a phase propagation time (tp) of said received signal (422);
   calculating means (1) for calculating position coordinates of said vibration input means (3) on the basis of said group propagation time (tg) detected by said first detecting means (53, 54) and said phase propagation time (tp) detected by said second detecting means (57);
   **said coordinate input apparatus being characterized in that**
   a gate signal output means (55, 56) is provided for detecting when a portion of said envelope signal (421) exceeds a predetermined threshold value (46) and for outputing a gate signal (48) in response thereto;
   said second detecting means (57) detect said phase propagation time (tp) of said received signal (422) by detecting the zero-crossing point of a leading edge of said received signal during a period of time when said gate signal (48) is output from said gate signal output means (55, 56).

2. A coordinate input apparatus comprising:

vibration input means (3) for generating a vibration;

a vibration propagating member (8) for propagating said vibration which is input by said vibration input means (3);

vibration sensor means (6a to 6c) for detecting said vibration which is propagated in said vibration propagating member (8);

envelope output means (52) comprising filter means (522) for outputting an envelope signal (421) of a signal (422) received by said vibration sensor means (6a to 6c);

differentiating means (531, 532) for outputting a n-order differential signal (423, 424) of said envelope signal (421), where n is a positive integer;

first detecting means (54) for detecting a peak of said envelope signal (421) which is output from said envelope output means (52) and for detecting a group propagation time (tg) of said received signal (422) based on the detection of said peak;

second detecting means (57) for detecting a phase propagating time (tp) of said received signal (422);

calculating means (1) for calculating position coordinates of said vibration input means (3) on the basis of said group propagation time (tg) detected by said first detecting means (54) and said phase propagation time (tp) detected by said second detecting means (57),

**said coordinate input apparatus being characterized in that**

a gate signal output means (55, 56) is provided for detecting when a portion of said n-order differential signal which is output from said differentiating means (531, 532) exceeds a predetermined threshold value (46) and for outputting a gate signal (48) in response thereto;

said second detecting means (57) detect said phase propagation time (tp) of said received signal (422) by detecting the zero-crossing point of a leading edge of said received signal during a period of time when said gate signal (48) is output from said gate signal output means (55, 56).

3. A coordinate input apparatus according to claim 2, **characterized in that** said differentiating means (531, 532) is a high pass filter.

4. A coordinate input apparatus according to claim 1 or 2, **characterized in that** said filter means (522) is a low pass filter.

5. A coordinate input apparatus according to claim 1 or 2, **characterized in that** said filter means (522) is a band pass filter.

6. A coordinate input apparatus according to any of the preceding claims 1 to 5, **characterized in that** said vibration input means (3) includes a piezoelectric element (4) for generating a vibration and drive means (2) for driving said piezoelectric element (4) to thereby generate said vibration.

7. A coordinate input apparatus according to any of the preceding claims 1 to 6, **characterized in that** said vibration sensor means (6a to 6c) are constructed by piezoelectric elements and are attached to a plurality of positions (Sa, Sb, Sc) of said vibration propagating member (8).

8. A coordinate input apparatus according to any of the preceding claims 1 to 7, **characterized in that** said calculating means (1) has a counter (13) to measure the group propagation time (tg) detected by said first detecting means (53, 54) and the phase propagation time (tp) detected by said second detecting means (57).

9. A coordinate input apparatus according to any of the preceding claims 1 to 8, **characterized in that** said vibration propagating member (8) is made of a transparent plate-like material and a display (11') is arranged under said vibration propagating member (8).

10. A coordinate input apparatus according to any of the preceding claims 1 to 9, **characterized in that** said envelope output means (52) comprises a circuit (521; 71) to output an absolute value signal of said received signal (422).

11. A coordinate input apparatus according to any of the preceding claims 1 to 10, **characterized in that** said first detecting means (53, 54) includes peak detecting means (53) for detecting the peak of said envelope signal (421).

**Patentansprüche**

1. Koordinateneingabegerät mit
einer Schwingungs-Eingabevorrichtung (3) zum Erzeugen einer Schwingung,
einem Schwingungs-Fortpflanzungsteil (8) zum Ausbreitenlassen der Schwingung, die durch die Schwingungs-Eingabevorrichtung (3) eingegeben wird,
Schwingungs-Sensoreinrichtungen (6a bis 6c) zum Erfassen der Schwingung, die sich auf dem Schwingungs-Fortpflanzungsteil (8) ausbreitet,
einer Hüllkurven-Ausgabeeinrichtung (52) mit einer Filtereinrichtung (522) zum Ausgeben eines Hüllkurvensignals (421) eines durch die Schwingungs-Sensoreinrichtungen (6a bis 6c) aufgenommenen Signals (422),
einer ersten Erfassungseinrichtung (53, 54) zum Erfassen einer Spitze des Hüllkurvensignals (421), das aus der Hüllkurven-Ausgabeeinrichtung (52) ausgegeben wird, und zum Erfassen einer Gruppenausbreitungszeit (tg) des aufgenommenen Signals (422) auf Grundlage der Erfassung der Spitze,
einer zweiten Erfassungseinrichtung (57) zum Erfassen einer Phasenausbreitungszeit (tp) des aufgenommenen Signals (422) und
einer Berechnungseinrichtung (1) zum Berechnen von Positionskoordinaten der Schwingungs-Eingabevorrichtung (3) auf Grundlage der durch die erste Erfassungseinrichtung (53, 54) erfaßten Gruppenausbreitungszeit (tg) und der durch die zweite Erfassungseinrichtung (57) erfaßten Phasenausbreitungszeit (tp),
**dadurch gekennzeichnet, daß**
eine Gatesignal-Ausgabeeinrichtung (55, 56) vorgesehen ist zum Erfassen, wenn ein Teil des Hüllkurvensignals (421) einen vorbestimmten Schwellwert (46) überschreitet, und zum Ausgeben eines Gatesignals (48) im Ansprechen darauf, und
die zweite Erfassungseinrichtung (57) die Phasenausbreitungszeit (tp) des aufgenommenen Signals (422) durch Erfassen des Null-Schnittpunktes einer steigenden Flanke des aufgenommenen Signals während einer Zeitperiode erfaßt, wenn das Gatesignal (48) aus der Gatesignal-Ausgabeeinrichtung (55, 56) ausgegeben wird.

2. Koordinateneingabegerät mit
einer Schwingungs-Eingabevorrichtung (3) zum Erzeugen einer Schwingung,
einem Schwingungs-Fortpflanzungsteil (8) zum Ausbreitenlassen der Schwingung, die durch die Schwingungs-Eingabevorrichtung (3) eingegeben wird,
Schwingungs-Sensoreinrichtungen (6a bis 6c) zum Erfassen der Schwingung, die sich auf dem Schwingungs-Fortpflanzungsteil (8) ausbreitet,
einer Hüllkurven-Ausgabeeinrichtung (52) mit einer Filtereinrichtung (522) zum Ausgeben eines Hüllkurvensignals (421) eines durch die Schwingungs-Sensoreinrichtungen (6a bis 6c) aufgenommenen Signals (422),
einer Differenziereinrichtung (531, 532) zum Ausgeben eines Differenziersignals n. Ordnung (423, 424) des Hüllkurvensignals (421), wobei n eine positive Ganzzahl ist,
einer ersten Erfassungseinrichtung (54) zum Erfassen einer Spitze des Hüllkurvensignals (421), das aus der Hüllkurven-Ausgabeeinrichtung (52) ausgegeben wird, und zum Erfassen einer Gruppenausbreitungszeit (tg) des aufgenommenen Signals (422) auf Grundlage der Erfassung der Spitze,
einer zweiten Erfassungseinrichtung (57) zum Erfassen einer Phasenausbreitungszeit (tp) des aufgenommenen Signals (422) und
einer Berechnungseinrichtung (1) zum Berechnen von Positionskoordinaten der Schwingungs-Eingabevorrichtung (3) auf Grundlage der durch die erste Erfassungseinrichtung (54) erfaßten Gruppenausbreitungszeit (tg) und der durch die zweite Erfassungseinrichtung (57) erfaßten Phasenausbreitungszeit (tp),
**dadurch gekennzeichnet, daß**
eine Gatesignal-Ausgabeeinrichtung (55, 56) vorgesehen ist zum Erfassen, wenn ein Teil des Differenziersignals n. Ordnung, das aus der Differenziereinrichtung (531, 532) ausgegeben wird, einen vorbestimmten Schwellwert (46) überschreitet, und zum Ausgeben eines Gatesignals (48) im Ansprechen darauf, und
die zweite Erfassungseinrichtung (57) die Phasenausbreitungszeit (tp) des aufgenommenen Signals (422) durch Erfassen des Null-Schnittpunktes einer steigenden Flanke des aufgenommenen Signals während einer Zeitperiode erfaßt, wenn das Gatesignal (48) aus der Gatesignal-Ausgabeeinrichtung (55, 56) ausgegeben wird.

3. Koordinateneingabegerät nach Anspruch 2, **dadurch gekennzeichnet, daß** die Differenziereinrichtung (531, 532) ein Hochpaßfilter ist.

4. Koordinateneingabegerät nach Anspruch 1 oder 2, **dadurch gekennzeichnet, daß** die Filtereinrichtung (522) ein Tiefpaßfilter ist.

5. Koordinateneingabegerät nach Anspruch 1 oder 2, **dadurch gekennzeichnet, daß** die Filtereinrichtung (522) ein Bandpaßfilter ist.

6. Koordinateneingabegerät nach einem der vorangehenden Ansprüche 1 bis 5, **dadurch gekennzeichnet, daß** die Schwingungs-Eingabevorrichtung (3) ein piezoelektrisches Element (4) zum Erzeugen einer Schwingung und eine Steuereinrichtung (2) zum Ansteuern des piezoelektrischen Elements (4) enthält, damit dadurch die Schwingung erzeugt wird.

7. Koordinateneingabegerät nach einem der vorangehenden Ansprüche 1 bis 6, **dadurch gekennzeichnet, daß** die Schwingungs-Sensoreinrichtungen (6a bis 6c) durch piezoelektrische Elemente gebildet und an eine Vielzahl von Stellen (Sa, Sb, Sc) des Schwingungs-Fortpflanzungsteils (8) befestigt sind.

8. Koordinateneingabegerät nach einem der vorangehenden Ansprüche 1 bis 7, **dadurch gekennzeichnet, daß** die Berechnungseinrichtung (1) einen Zähler (13) zum Messen der durch die erste Erfassungseinrichtung (53, 54) erfaßten Gruppenausbreitungszeit (tg) und der durch die zweite Erfassungseinrichtung (57) erfaßten Phasenausbreitungszeit (tp) aufweist.

9. Koordinateneingabegerät nach einem der vorangehenden Ansprüche 1 bis 8, **dadurch gekennzeichnet, daß** das Schwingungs-Fortpflanzungsteil (8) aus einem transparenten plattenähnlichen Material hergestellt ist und eine Anzeige (11') unter dem Schwingungs-Fortpflanzungsteil (8) angeordnet ist.

10. Koordinateneingabegerät nach einem der vorangehenden Ansprüche 1 bis 9, **dadurch gekennzeichnet, daß** die Hüllkurven-Ausgabeeinrichtung (52) eine Schaltung (521; 71) zum Ausgeben eines Absolutwertsignals des aufgenommenen Signals (422) aufweist.

11. Koordinateneingabegerät nach einem der vorangehenden Ansprüche 1 bis 10, **dadurch gekennzeichnet, daß** die erste Erfassungseinrichtung (53, 54) eine Spitzenerfassungseinrichtung (53) zum Erfassen der Spitze des Hüllkurvensignals (421) enthält.


## Revendications

1. Un appareil d'entrée de coordonnées comprenant :
des moyens d'entrée de vibration (3) pour produire une vibration ;
un élément de propagation de vibration (8) pour propager la vibration qui est introduite par les moyens d'entrée de vibration (3) ;
des moyens détecteurs de vibration (6a à 6c) pour détecter la vibration qui se propage dans l'élément de propagation de vibration (8) ;
des moyens de sortie d'enveloppe (52) comprenant des moyens de filtrage (522) pour fournir en sortie un signal d'enveloppe (421) d'un signal (422) qui est reçu par les moyens détecteurs de vibration (6a à 6c) ;
des premiers moyens de détection (53, 54) pour détecter une crête du signal d'enveloppe (421) qui est fourni par les moyens de sortie d'enveloppe (52), et pour détecter un temps de propagation de groupe (tg) du signal reçu (422) sur la base de la détection de cette crête ;
des seconds moyens de détection (57) pour détecter un temps de propagation de phase (tp) du signal reçu (422) ;
des moyens de calcul (1) pour calculer des coordonnées de position des moyens d'entrée de vibration (3) sur la base du temps de propagation de groupe (tg) qui est détecté par les premiers moyens de détection (53, 54) et du temps de propagation de phase (tp) qui est détecté par les seconds moyens de détection (57) ;
cet appareil d'entrée de coordonnées étant caractérisé en ce que des moyens de sortie de signal de transmission sélective (55, 56) sont incorporés pour détecter la situation dans laquelle une partie du signal d'enveloppe (421) dépasse une valeur de seuil prédéterminée (46) et pour fournir en sortie un signal de transmission sélective (48) en présence de cette situation ;

les seconds moyens de détection (57) détectent le temps de propagation de phase (tp) du signal reçu (422) en détectant le point de passage par zéro d'un front avant du signal reçu, pendant un intervalle de temps au cours duquel le signal de transmission sélective (48) est émis par les moyens de sortie de signal de transmission sélective (55, 56).

2. Un appareil d'entrée de coordonnées comprenant:

des moyens d'entrée de vibration (3) pour produire une vibration ;

un élément de propagation de vibration (8) pour propager la vibration qui est introduite par les moyens d'entrée de vibration (3) ;

des moyens détecteurs de vibration (6a à 6c) pour détecter la vibration qui se propage dans l'élément de propagation de vibration (8) ;

des moyens de sortie d'enveloppe (52) comprenant des moyens de filtrage (522) pour fournir en sortie un signal d'enveloppe (421) d'un signal (422) qui est reçu par les moyens détecteurs de vibration (6a à 6c) ;

des moyens de différentiation (531, 532) pour fournir en sortie un signal différentiel d'ordre n (423, 424) du signal d'enveloppe (421), en désignant par n un entier positif ;

des premiers moyens de détection (54) pour détecter une crête du signal d'enveloppe (421) qui est fourni par les moyens de sortie d'enveloppe (52), et pour détecter un temps de propagation de groupe (tg) du signal reçu (422), sur la base de la détection de la crête ;

des seconds moyens de détection (57) pour détecter un temps de propagation de phase (tp) du signal reçu (422) ;

des moyens de calcul (1) pour calculer des coordonnées de position des moyens d'entrée de vibration (3) sur la base du temps de propagation de groupe (tg) qui est détecté par les premiers moyens de détection (54) et du temps de propagation de phase (tp) qui est détecté par les seconds moyens de détection (57),

cet appareil d'entrée de coordonnées étant caractérisé en ce que des moyens de sortie de signal de transmission sélective (55, 56) sont incorporés pour détecter la situation dans laquelle une partie du signal différentiel d'ordre n qui est fourni par les moyens de différentiation (531, 532) dépasse une valeur de seuil prédéterminée (46), et pour émettre un signal de transmission sélective (48) en présence de cette situation ; les seconds moyens de détection (57) détectent le temps de propagation de phase (tp) du signal reçu (422), en détectant le point de passage par zéro d'un front avant du signal reçu, pendant un intervalle de temps au cours duquel le signal de transmission sélective (48) est fourni par les moyens de sortie de signal de transmission sélective (55, 56).

3. Un appareil d'entrée de coordonnées selon la revendication 2, caractérisé en ce que les moyens de différentiation (531, 532) sont un filtre passe-haut.

4. Un appareil d'entrée de coordonnées selon la revendication 1 ou 2, caractérisé en ce que les moyens de filtrage (522) sont un filtre passe-bas.

5. Un appareil d'entrée de coordonnées selon la revendication 1 ou 2, caractérisé en ce que les moyens de filtrage (522) sont un filtre passe-bande.

6. Un appareil d'entrée de coordonnées selon l'une quelconque des revendications 1 à 5 précédentes, caractérisé en ce que les moyens d'entrée de vibration (3) comprennent un élément piézoélectrique (4) pour produire une vibration, et des moyens d'attaque (2) pour attaquer l'élément piézoélectrique (4) pour produire ainsi la vibration.

7. Un appareil d'entrée de coordonnées selon l'une quelconque des revendications 1 à 6 précédentes, caractérisé en ce que les moyens détecteurs de vibration (6a à 6c) sont constitués par des éléments piézoélectriques et sont fixés à un ensemble de positions (Sa, Sb, Sc) de l'élément de propagation de vibration (8).

8. Un appareil d'entrée de coordonnées selon l'une quelconque des revendications 1 à 7 précédentes, caractérisé en ce que les moyens de calcul (1) comprennent un compteur (13) pour mesurer le temps de propagation de groupe (tg) qui est détecté par les premiers moyens de détection (53, 54) et le temps de propagation de phase (tp) qui est détecté par les seconds moyens de détection (57).

9. Un appareil d'entrée de coordonnées selon l'une quelconque des revendications 1 à 8 précédentes, caractérisé en ce que l'élément de propagation de vibration (8) est constitué par un matériau transparent semblable à une plaque, et un dispositif de visualisation (11') est disposé sous l'élément de propagation de vibration (8).

10. Un appareil d'entrée de coordonnées selon l'une quelconque des revendications 1 à 9 précédentes, caractérisé en ce que les moyens de sortie d'enveloppe (52) comprennent un circuit (521 ; 71) qui est destiné à fournir en sortie un signal de valeur absolue du signal reçu (422).

11. Un appareil d'entrée de coordonnées selon l'une quelconque des revendications 1 à 10 précédentes, caractérisé en ce que les premiers moyens de détection (53, 54) comprennent des moyens de détection de crête (53) pour détecter la crête du signal d'enveloppe (421).

# FIG. 1

# FIG. 2

FIG. 3

EP 0 368 351 B1

# FIG. 4

EP 0 368 351 B1

## FIG. 5

```
              51              52              53              54              1
        ┌────────────┐  ┌────────────┐  ┌────────────┐  ┌────────────┐  ┌────────────┐
        │ PRE-STAGE  │  │  ENVELOPE  │  │  ENVELOPE  │  │            │tg│            │
   ──── │    AMP     ├──┤  DETECTOR  ├──┤    PEAK    ├──┤ tg-DETECTOR├──┤ CONTROLLER │
        │            │  │            │  │  DETECTOR  │  │            │  │            │
        └────────────┘  └────────────┘  └────────────┘  └────────────┘  └────────────┘
  6                                                                    57         │tp
                                                        ┌──────────────────┐
                                              ┌─────────┤   tp-COMPARATOR  ├──
                                              │         └──────────────────┘
                        55              56    │                    ▲
                  ┌────────────┐  ┌──────────────────┐             │
                  │   SIGNAL   │  │   MONO-STABLE    │             │
                  │  DETECTOR  ├──┤  MULTI-VIBRATOR  ├─────────────┘
                  │            │  │                  │
                  └────────────┘  └──────────────────┘
```

## FIG. 6

```
              51                    ENVELOPE DETECTOR          52
        ┌────────────┐   ┌─────────────────────────────────┐
        │ PRE-STAGE  │   │ ┌──────────┐      ┌──────────┐   │  ┌──────────┐   ┌────────────┐
   ──── │    AMP     ├───┼─┤ ABSOLUTE ├──────┤  L.P.F   ├───┼──┤ ENVELOPE ├───┤ tg-DETECTOR│
        │            │   │ │  VALUE   │      │          │   │  │   PEAK   │   │            │
        └────────────┘   │ │GENERATOR │      └──────────┘   │  │ DETECTOR │   └────────────┘
  6            51        │ └──────────┘                     │  └──────────┘        54
                         └─────────────────────────────────┘       53
                              521                522
```

FIG. 7

FIG. 8

51 PRE-STAGE AMP → 52 ENVELOPE DETECTOR → 531 DIFFERENTIAL CCT → 54 tg-DETECTOR → I CONTROLLER

6

55 SIGNAL DETECTOR → 56 MONO-STABLE MULTI-VIBRATOR → 57 tp-COMPARATOR

tg

tp

EP 0 368 351 B1

FIG. 9

F I G. 10

EP 0 368 351 B1

FIG. 11

EP 0 368 351 B1

ENVELOPE DETECTOR

| PRE-STAGE AMP | ABSOLUTE VALUE GENERATOR | B.P.F | ENVELOPE PEAK DETECTOR | tg-DETECTOR |

6

51

71

52

72

53

54

## FIG. 12

L.P.F

dB

EXTERNAL DISTURBANCE

CARRIER

PASSED ZONE

f

## FIG. 13A

B.P.F

dB

EXTERNAL DISTURBANCE

CARRIER

PASSED ZONE

f

## FIG. 13B

FIG. 14

FIG. 15A

FIG. 15B